# EUROPEAN PATENT SPECIFICATION

(11) **EP 1 720 300 B1**
(45) Date of publication and mention of the grant of the patent: **30.12.2009**
(21) Application number: 05733075.5
(22) Date of filing: 31.03.2005
(51) Int. Cl.: H04L 12/14, H04L 12/56

(54) **A METHOD FOR IMPROVING CHARGING RULES IN PACKET DATA SERVICES AND THE OPERATION THEREOF**
VERFAHREN ZUR VERBESSERUNG DER BERECHNUNGSREGELN IN PAKETDATENDIENSTEN UND DIE ENTSPRECHENDE DURCHFÜHRUNG
PROCEDE D'AMELIORATION DES REGLES DE TAXATION DANS DES SERVICES DE DONNEES PAR PAQUETS ET FONCTIONNEMENT CORRESPONDANT

(30) Priority: 09.04.2004 CN 200410033720
(43) Date of publication of application: 08.11.2006
(73) Proprietor: Huawei Technologies Co., Ltd., Longgang District, Shenzhen Guangdong 518129 (CN)
(72) Inventor: DUAN, Xiaoqin, Shenzhen, Guangdong 518129 (CN)
(74) Representative: Kreuz, Georg Maria
(86) International application number: PCT/CN2005/000425
(87) International publication number: WO 2005/099184

(56) References cited:
- EP-A- 1 296 481
- EP-A2- 1 310 085
- WO-A2-2004/015937
- JP-A- 4 045 633
- JP-A- 2001 326 634
- KR-A- 2003 058 553
- "3rd Generation Partnership Project; Technical Specification Group Services and Systems Aspects; Overall High Level Functionality and Architecture Impacts of Flow Based Charging, Stage 2 (Release 6) 3GPP TS 23.125 V6.0.0" 3GPP TS 23.125 V6.0.0, XX, XX, March 2004 (2004-03), pages 1-29, XP002391829
- ETSI: "Universal Mobile Telecommunications System (UMTS);Telecommunications Management; Charging and billing; 3G call and event data for the Packet Switched (PS) domain (3GPP TS 32.015 version 3.12.0 Release 1999)" ETSI STANDARDS, EUROPEAN TELECOMMUNICATIONS STANDARDS INSTITUTE, SOPHIA-ANTIPO, FR, no. V3120, 31 December 2003 (2003-12-31), pages 1-66, XP002419212 ISSN: 0000-0001

## Description

### Field of the Technology

The present invention relates to charging technology, and more specifically to a method for enhancing charging rules for packet data service and for operation of the charging rules.

### Background of the Invention

With the wide application of packet data service, how to charge packet data service accurately and reasonably has become a common concern of operators.

As described in 3GPP TS 23.125 V6.0.0, the document specifies the overall high level functionality and architecture impacts of Flow Based Charging. And another document of 3GPP TS 32.015 version 3.12.0 suggests a charging ID, which can be used together with GGSN address to identify all records produced in SGSN and GGSN involved in a single PDP context. The charging ID here is used for a billing system to gather the records of one PDP context, to permit subsequent Charging Gateway or Billing system correlation of the generated Charging Data Records (CDRs). In order to enable operators the ability to provide a commercially viable service there is a need to provide charging functions.

Number of EP-A-1296481 provides that a mobile communications service control apparatus comprises signal processing means for conducting prescribed signal processing of a packet transmitted from a mobile terminal or preset communications-equipment. This document discloses that a charging apparatus extracts the URL from the header of a HTTP request and select the charging rule that is associated with this URL to calculate the communication rate so that the communication rate can be determined flexibly.

Number of EP-A2-1310085 provides a common charging identifier for communication networks. This document discloses that a common identifier ought to be added to the collect charging information (CDRs) to make it possible to bill based only on the CDRs created by the IP telephony layer and to omit the CDRs created by the GPRS/UMTS layer. This document also discloses furthermore that when a PDP context is created by the GGSN, the GGSN associates a Charging Identification parameter with the PDP context. Then, the Create PDP Context Response including the Charging Identification parameter is forwarded to the SGSN. Thus to associate the charging information created by the SGSN, the GGSN and the charging information created by the CSCF so that the billing would be operator-specific.

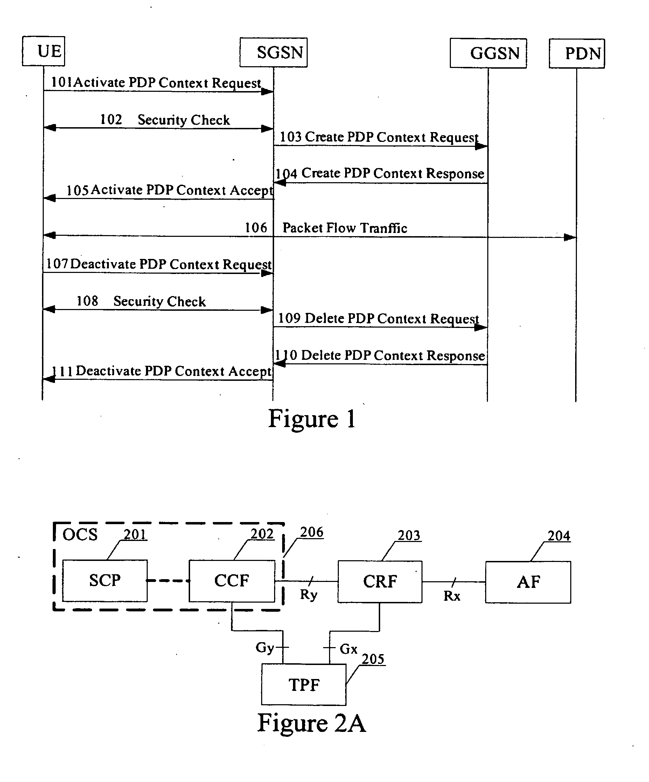

Figure 1 is a flowchart illustrating an activation, data transmission and de-activation of a Packet Data Protocol Context (PDP Context). As shown in Figure 1, in General Packet Radio Service (GPRS), an implementing procedure of activation, data transmission and de-activation of a PDP Context includes the following steps:
Step 101: A User Equipment (UE) sends an Activate PDP Context Request to a Serving GPRS Support Node (SGSN), and this Activate PDP Context Request carries information of a Network Layer Service Access Point Identifier (NSAPI), PDP type, an Access Point Name (APN), a number of Quality of Service (QoS) parameters, a Transaction Identifier (TI) and so on. The NSAPI is used as a component of a Tunnel Identifier (TEID) between the SGSN and a Gateway GPRS Support Node (GGSN) to identify the PDP Context. The PDP Type includes the Peer-Peer Protocol (PPP) type, Internet Protocol (IP) type, etc. The APN can be provided for the SGSN by the UE, by which the SGSN addresses a corresponding GGSN and the GGSN determines the external network to be accessed by the UE, or the UE can choose not to provide the APN for the SGSN, in that case, the SGSN selects the default APN according to the subscriber information of the UE. The QoS parameters represent the quality required by the packet data service specified by the UE. The TI is used for the UE to identify a PDP context.
Step 102: After receiving the Activate PDP Context Request, the SGSN performs a security check and encryption with the UE, and this step is optional.
Step 103: The SGSN analyses GGSN address information according to the APN, and creates the TEID for the PDP Context if the SGSN successfully figure out the GGSN address information according to the APN. The TEID can be a combination of an International Mobile Subscriber Identity (IMSI) and the NSAPI to uniquely identify a PDP Context between the SGSN and the GGSN. Then the SGSN sends a Create PDP Context Request to the GGSN, which carries the PDP type, the PDP address, the APN, a number of QoS parameters, the TEID, and a select mode therein. The PDP address is an IP address of the UE, which is an optional parameter. When a Create PDP Context Request doesn't carry a PDP address therein, the IP address of the UE may be allocated by the GGSN in the subsequent process, or by a Packet Data Network (PDN) that is finally connected with the UE. The select mode refers to an APN-selecting mode, namely whether the APN is selected by the UE or by the SGSN. If the GGSN address information is not accessed for the SGSN according to the APN, the SGSN will reject the Activate PDP Context Request from the UE.
Step 104: After receiving the Create PDP Context Request, the GGSN determines an external PDN according to the APN, then allocates a Charging ID, starts charging, and confers on QoS. The GGSN sends a Create PDP Context Response back to the SGSN, when the service quality requirement is met. The Create PDP Context Response carries the information of the TEID, the PDP address, a Backbone Bearer protocol, the number of QoS parameters, and the Charging ID. When the GGSN does not meet the service quality requirement of the QoS parameters, the GGSN rejects the Create PDP Context Request from the SGSN, and the SGSN rejects the Activate PDP Context Request from the UE.
Step 105: After receiving the Create PDP Context Response, the SGSN adds the NSAPI and the GGSN address information into the PDP Context in order to identify this PDP Context, selects wireless precedence according to QoS parameters, and then returns an Activate PDP Context Accept to the UE. The Activate PDP Context Accept carries the information of the PDP type, the PDP address, the TI, the number of QoS parameters, the wireless precedence, and a number of PDP configuration options. Moreover, the SGSN starts charging. The UE receives the Activate PDP Context Accept and establishes a route with the GGSN. By this time the transmission channel between the UE and the PDN is established and data transmission is able to start.
Step 106: The UE transmits data with the PDN through the SGSN and the GGSN.
Step 107: On finishing the data transmission, the UE sends a Deactivate PDP Context Request to the SGSN carrying the TI therein.
Step 108: After receiving the Deactivate PDP Context Request, the SGSN performs Security check and encryption with the UE, and this step is optional.
Step 109-Step 111: The SGSN sends a Delete PDP Context Request carrying the TEID to the GGSN. After receiving the Delete PDP Context Request, the GGSN ends the charging of the UE, deletes the PDP Context corresponding to the TEID, and then sends a Delete PDP Context Response to the SGSN. The Delete PDP Context Response carries the TEID. After receiving the Delete PDP Context Response, the SGSN ends the charging of the UE, deletes the PDP Context corresponding to the TEID, and sends a Deactivate PDP Context Response carrying the TI to the UE. After receiving the Deactivate PDP Context Response, the UE deletes the PDP Context corresponding to TI.

As shown in Figure 1, in the present GRPS charging system, the charging starts when the PDP context is activated and comes to its end when the PDP context is deactivated, which means the present charging system can only charges according to a transmitted data flow or an activate time duration of the PDP context. In practice, however, after establishing a transmission channel with the PDN, the UE can perform a plurality of services based on one activated PDP Context, i.e., if the PDN can provide a plurality of services, such as Send/Receive Email services, Wireless Application Protocol (WAP) based browse services, File Transfer Protocol (FTP) based file transfer services and so on, an activated PDP Context can bear various services provided by the PDN after the UE establishes a transmission channel with this PDN. Meanwhile operators or service providers may adopt different charging approaches for different charging modes of various services, for instance, Send/Receive Email service can be charged on times of Sending and Receiving events, WAP browse service can be charged according to flow, file transfer service can also be charged according to flow, and yet, a charging rate of WAP browse service is different from that of file transfer service. Thus, it is totally impossible to perform separate charging with the existing GPRS charging system for different services the same PDP Context bears.

In view of the above, it is being discussed in the 3rd Generation Partnership Project (3GPP) as to how to implement IP Flow Based Charging (FBC). As far as a packet data service is concerned, all the transmitted and received IP Flows or IP Packets when a UE user uses the service may be called Service Data Flow, i.e. the Service Data Flow is a set of a plurality of IP Flows, therefore the IP Flow Based Charging can truly reflect the resource occupation of a certain service. The IP Flow Based Charging can be described like this: IP Flows of different services that the same PDP Context bears are separately screened out through some filters similar to sieves, then IP Flows screened out by different filters are respectively charged so as to respectively charge different Service Data Flows. In this way, a charging granularity based on IP Flows is far less than that based on a PDP Context. The charging granularity may be regarded as the size of a hole of a sieve, therefore the charging granularity based on PDP Context will be like a sieve hole determined by one PDP Context while the charging granularity based on IP Flow will be like a sieve hole determined by one IP Flow, that is, there will be more than one sieve holes contained in one PDP Context. Therefore, compared with the charging based on PDP Context, charging based on IP Flow can provide more charging approaches for operators or service providers.

In 3GPP, aspects of FBC like system architectures, function requirements and flow of interactive messages are described. The FBC system architecture supporting online charging is shown in Figure 2A, in which Online Charging System (OCS) 206 is composed of a Service Control Point (SCP) 201 of Customized Application for Mobile Network Enhanced Logic (CAMEL) and a service data flow based Credit Control Function (CCF) 202. The CCF 202 is connected with service data flow based Charging Rule Function (CRF) 203 via an interface Ry. The CRF 203 is connected with an Application Function (AF) 204 via an interface Rx and with a Traffic Plane Function (TPF) 205 via an interface Gx. The CCF 202 is connected with the TPF 205 via an interface Gy.

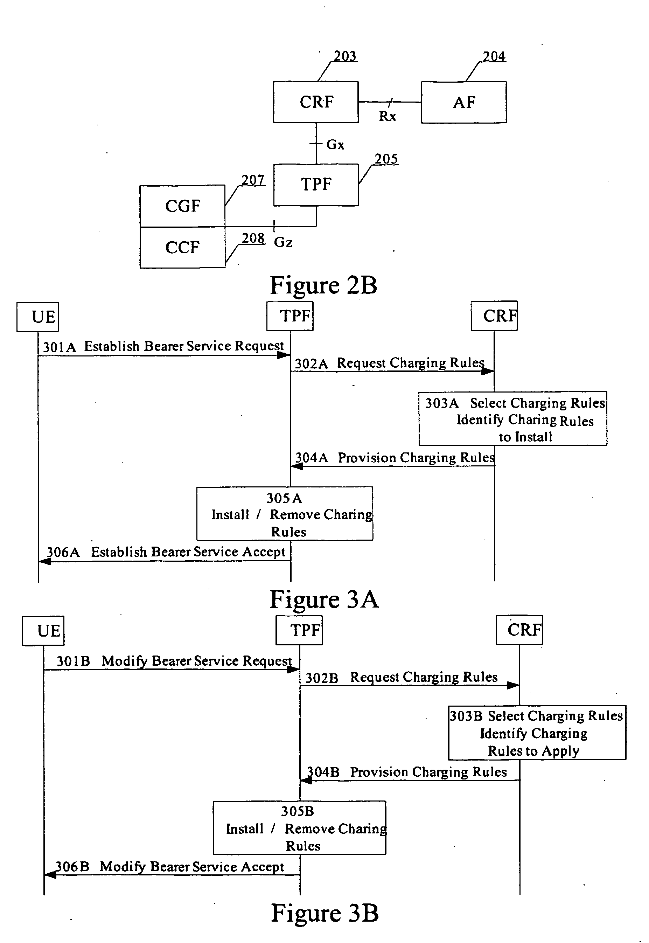

The FBC system architecture supporting offline charging is shown in Figure 2B, in which the CRF 203 is connected with the AF 204 via an interface Rx and with the TPF 205 via an interface Gx, and the TPF 205 is connected with a Charging Gateway Function (CGF) 207 and a Charging Collection Function (CCF) 208 respectively via an interface Gz.

According to the 3GPP provision for functions implementing the FBC, the TPF 205 bears IP Flows. During the establishment of the IP Flow bearer, the TPF 205 sends a Charging Rule Request to the CRF 203 via the Gx interface. The Charging Rule Request carries relevant information of subscriber and the UE, bearer characteristics, network information, and so on. The relevant information of subscriber and the UE may be a Mobile Station ISDN (MSISDN)□an International Mobile Subscriber Identity (IMSI) and the relevant information of network may be MNC, MCC, etc. In addition, the bearer may be modified during the IP Flow transmission. For example, when QoS parameters of the same service are different, charging rules may be different accordingly. For instance, the charging rate may be decrease as QoS parameters decrease. Therefore it is necessary to re-confer on QoS parameters. In this case, during the modification of the bearer, the TPF 205 resends a Charging Rule Request to the CRF 203 to request for new charging rules. The CRF 203 selects a proper charging rule according to the input information provided by the TPF 205 and then returns the selected charging rule to the TPF 205. The charging rule includes information of charging mechanism, charging type, charging key, Service Data Flow Filter, and charging rule precedence. The charging mechanism may be online charging or offline charging. The charging type may be a type of time span based charging or a type of data flow based charging. The charging key is a parameter related with the charging rate, and the CRF 203 may provide only parameters related with charging rate for the TPF 205, rather than directly provide charging rate for the TPF 205. The Service Data Flow Filter is used to indicate the TPF 205 which IP Flows are to be filtered, and then the TPF 205 charges these filtered IP Flows according to the charging rules. Service Data Flow Filter may include an IP quintuple having such information as Source/Destination IP Address, Source/Destination Port Number, and Protocol ID. For instance, the CRF 203 indicates the TPF 205 to filter the IP Flow with the Source IP Address 10.0.0.1, Destination IP Address 10.0.0.2, Source/Destination Port Number 20 and the protocol type Transmission Control Protocol (TCP), and then charges the filtered IP Flow according to the charging rule. Finally, during the deletion of the bearer, the TPF 205 may as well send a Charging Rule Request to the CRF 203 to request a new charging rule from the CRF. At this time, the CRF 203 may request the TPF 205 to delete the previously installed charging rule.

In addition, the CRF 203 may determine the charging rule according to the input information of the AF 204 or the OCS 20 besides the input information of the TPF 205. For example, the AF 204 may notify the CRF 203 of the current service type used by the user, and the CRF 203 may select the corresponding charging rule according to this service type.

For a GPRS network, the TPF 205 is the GGSN, the AF is a service gateway or a service server in the PDN and the CRF 203 is an added logical entity. The TPF 205 is the executing point of charging rules and the CRF 203 is the control point of charging rules.

Figure 3A is the flow chart of issuing the charging rule when a bearer is established. As shown in Figure 3A, the implementing procedure of issuing the charging rule when a bearer is established includes the following steps:
Step 301 A: The UE sends an establish bearer service request to the TPF while in a GPRS network the corresponding process is that the GGSN receives a Create PDP Context Request.
Step 302A: After having received the establish bearer service request, the TPF sends a Charging Rule Request to the CRF, and the Charging Rule Request carries input information for the CRF to determine the charging rule.
Steps 303A~304A: After having received the Charging Rule Request, the CRF selects a charging rule according to the input information carried by the Charging Rule Request, and then returns Provision Charging Rules. The Provision Charging Rules may carry the selected charging rule.
Steps 305A~306A: After having received Provision Charging Rules, the TPF installs a new charging rule according to the charging rule selected by the CRF, or deletes the original charging rule, or installs a new charging rule while deleting the original one. Then the TPF returns an Establish Bearer Service Accept to the UE, accepts the establish bearer service request initiated by the UE and continues with the subsequent steps of the Establish Bearer process.

Figure 3B is the flow chart of issuing the charging rule when a bearer is modified. As shown in Figure 3B, the implementing procedure of issuing the charging rule when a bearer is modified includes the following steps:
Step 301B: The UE sends a modify bearer service request to the TPF while in a GPRS network the corresponding process is that the GGSN receives an Update PDP Context Request.
Step 302B: After having received the modify bearer service request, the TPF sends a Charging Rule Request to the CRF, and the Charging Rule Request carries the input information for the CRF to determine the charging rule.
Steps 303B~304B: After having received the Charging Rule Request, the CRF selects a charging rule according to the input information carried by this Charging Rule Request, and then returns Provision Charging Rules carrying the selected charging rule.
Steps 305B~306B: After having received Provision Charging Rules, the TPF installs a new charging rule according to the charging rule selected by the CRF, or deletes the original charging rule, or installs a new charging rule while deleting the original one . Then the TPF returns a Modify Bearer Service Accept to the UE, accepts the modify bearer service request initiated by the UE and continues with the subsequent steps of the Modify Bearer process.

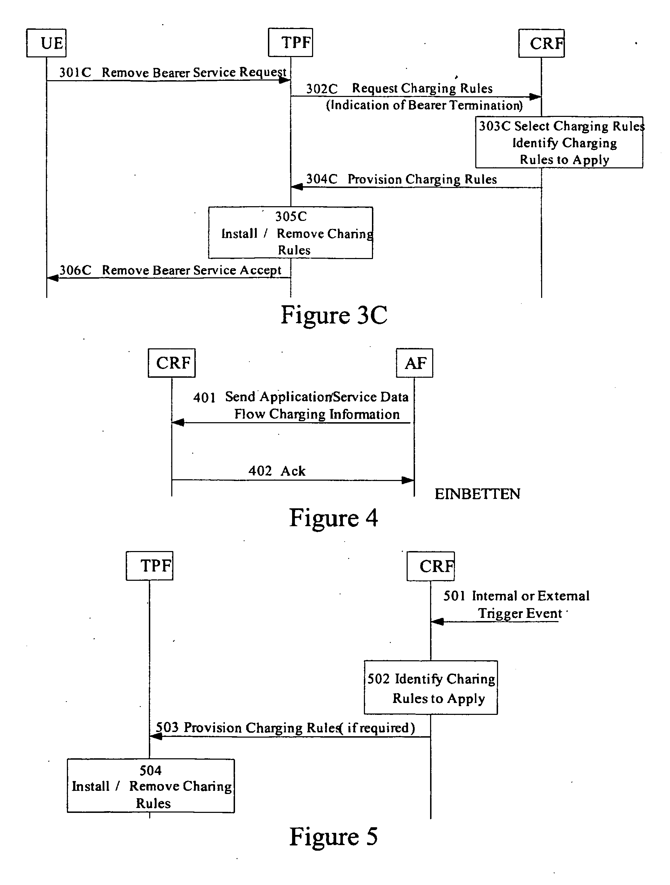

Figure 3C is the flow chart of issuing the charging rule when a bearer is deleted. As shown in figure 3B, the implementing procedure of issuing the charging rule when a bearer is deleted includes the following steps:
Step 301C: The UE sends a remove bearer service request to the TPF while in a GPRS network the corresponding process is that the GGSN receives a Delete PDP Context Request.
Step 302C: After having received the remove bearer service request, the TPF sends a Charging Rule Request to the CRF, and the Charging Rule Request carries the input information for the CRF to determine the charging rule.
Steps 303B~304B: After having received the Charging Rule Request, the CRF selects a charging rule according to the input information carried by this Charging Rule Request, and then returns Provision Charging Rules carrying the selected charging rule.
Steps 305B~306B: After having received Provision Charging Rules, the TPF installs a new charging rule according to the charging rule selected by the CRF, or deletes the original charging rule, or installs a new charging rule while deleting the original one. Then the TPF returns a Remove Bearer Service Accept to the UE, accepts the remove bearer service request initiated by the UE and continues with the subsequent steps of the Remove Bearer process.

Besides, the CRF may also voluntarily send a charging rule to the TPF. For instance, in the data transmission process between the UE and the AF, after having received the input information relating to charging of the AF, the CRF selects a proper charging rule according to the input information provided by the AF, and then voluntarily issues the selected charging rule to the TPF. The specific implementing procedure of the AF providing the input information of charging for the CRF is shown in Figure 4:
Step 401: The AF sends Application/Service Data Flow Charging Information to the CRF.
Step 402: After having received the Application/Service Data Flow Charging Information, the CRF returns an Acknowledgement (Ack) to the AF to notify the AF of already receiving the Application/Service Data Flow Charging Information sent by the AF.

Figure 5 is the flow chart of the CRF voluntarily issuing the charging rule to the TPF. As shown in figure 5, the implementing procedure of the CRF voluntarily issuing the charging rule to the TPF includes the following steps:
Step 501: The CRF receives a certain Internal or External Trigger Event and relevant information about this event, such as the event of the AF sending the input information of charging rule selection to the CRF.
Step 502: The CRF selects the corresponding charging rule according to the acquired information. The acquired information may be the charging-relevant input information provided by the AF. For instance, the user is using a certain service of the AF, and the service has special charging requirements, e.g., the charging rate is different from that of other services, therefore, the AF provides relevant charging information of this service for the CRF. The acquired information may also be the charging-relevant input information provided by the TPF.
Step 503: The CRF sends the Provision Charging Rules to the TPF when needed, and the Provision Charging Rules may carry the selected charging rule.
Step 504: After having received Provision Charging Rules, the TPF installs a new charging rule according to the charging rule selected by the CRF, or deletes the original charging rule, or installs a new charging rule while deleting the original one .

A charging rule defined in the 3GPP Specification may include the following information: online charging or offline charging for the service data flow; data-flow-based offline charging or time-span-based offline charging; charging keys; filters of the service data flow; the precedence of the charging rule.

It is defined in the present 3GPP Specification that, the TPF may remove original charging rules when the TPF receives a new charging rule from the CRF. However, as the charging rules cannot be differentiated from each other, even if the new charging rule that the CRF sends to the TPF contains an action instruction of removing an original charging rule, the TPF cannot determine which charging rule is to be removed. As a result, after the TPF receives a new charging rule, it is not possible for the TPF to perform a correct operation on the original charging rules and remove the corresponding charging rule as required by the CRF, leading to repeated charging of the user.

In addition, one charging rule may include more than one Service Data Flow Filter. In some cases, a certain Service Data Flow Filter under the charging rule needs to be removed. However, as the Service Data Flow Filters cannot be differentiated either, it is not possible for the TPF to determine the Service Data Flow Filter to be removed.

Besides, as defined in the present 3GPP Specification, when the CRF is issuing a charging rule to the TPF, the CRF may indicate the TPF to remove an original charging rule, or install a new charging rule, or leave the original charging rule as it is. However, in some cases, a new charging rule may require modification of only a few parameters of the original charging rule or just add some parameter information, for instance, only the charging keys of the original charging rule is to be modified or a new Service Data Flow Filter to be added while other parameters remain the same. According to the current 3GPP Specification, the CRF needs to send an instruction of removing a charging rule first, then sends an instruction of installing a new charging rule. In this way, to modify the same charging rule, the CRF needs to provide two instructions, thereby leading to a great deal of redundant information transmitted between the CRF and the TPF, consequently increasing the load of message flow between the CRF and the TPF and making the TPF operation more complicated.

Moreover, in the current 3GPP Specification, there is no feedback mechanism from the TPF to the CRF after the TPF executes a charging rule action as instructed by the CRF. As a result, the CRF cannot learn exactly the operations performed by the TPF and cannot adjust correctly the subsequent operation instructions to be issued.

### Summary of the Invention

In view of the above, the main object of the present invention is to provide a method to enhance charging rules of packet data service so as to make the charging of packet data service more reasonable.

Another object of the present invention is to provide a method to operate charging rules of packet data service so as to avoid redundant information transmission between the CRF and the TPF and greatly reduce the message flow load between the CRF and the TPF.

In addition, a method for responding to operations in packet data service is provided in the present invention so that the CRF can find the operation result performed by TPF.

To achieve the above-mentioned object, the present invention provides a method for enhancing charging rules in packet data service, which includes the following steps: An identifier is allocated to identify a charging rule and provided to a Traffic Plane Function (TPF).

Preferably, the action indication includes a remove operation indication, or a modify operation indication, or an install operation indication, or an activate operation indication, or a combination of the above indications. The parameter information is sent to the TPF together with said indications and the TPF performs the indicated operation on the parameter information in the charging rule according to the action indication. The action indication, or the identifier, or the parameter information, or a combination of the mentioned above, is sent to the TPF together with the charging rule.

Preferably, the identifier includes identifier to identify charging rule, or the identifier to identify service data flow filter.

Preferably, the identifier is allocated by a CRF, the TPF, or a network operator, or defined by specification, or determined by a combination of the mentioned above.

A method for performing operations on charging rules in packet data service is also disclosed in the present invention, which includes that a modify indication is provided to the TPF and the TPF modifies the charging rule according to the action indication. The method further includes that while the modify indication is sent to the TPF, a charging rule is sent to the TPF, and the TPF installs a new modified charging rule after removing the original charging rule according to the Modify indication.

Another method for performing operations on charging rules in packet data service includes that an install indication is provided to the TPF. The method further includes that after providing an install indication to the TPF, the TPF performs the install operation on charging rule according to the action indication. Furthermore, the method further includes that while sending the install indication to the TPF, the identifier and the parameter information are sent to the TPF and the TPF performs the install operation on the parameters of the charging rule corresponding to the identifier according to the install indication.

Preferably, while sending the install indication to the TPF, the identifier and the parameter information are sent to the TPF and the TPF performs the install operation on the parameters of the charging rule corresponding to the identifier according to the install indication.

A method for responding to operations on charging rules in packet data service is also disclosed in the present invention, which includes that an action indication is provided to the TPF, and the TPF performs the indicated operation on charging rule and the TPF returning an operation response. The operation response may include an Operation Success Response or an Operation Failure Response.

Preferably, the Operation Failure Response carries error cause information.

In the present invention, the CRF further provides an identifier while providing a charging rule. The identifier may be used to identify charging rule, or service data flow filter, or service data flow filter in the charging rule. After the CRF has provided action indications and the identifier for the TPF, the TPF can perform correct operations on the charging rule(s) or service data flow filter(s) according to the action indications and the identifier for the TPF, the TPF can perform correct operations on the charging rule(s) or service data flow filter(s) according to the identifier so as to make the charging of packet data service more reasonable.

The technical solution in accordance with the embodiments of the invention is given by a method and a system according to the appended claims.

A system for enhancing charging rules of a packet data service according to the GPRS architecture, is also disclosed in the present invention, the system includes: a providing means, adapted to provide a first identifier to identify a charging rule and a first action indication corresponding to the first identifier indicating to perform operations on the charging rule corresponding to the first identifier according to the first action indication; wherein the first action indication indicates to modify the charging rule identified by the first identifier, and the system is further adapted to provide to a Traffic Plane Function, TPF, the first identifier and the first action indication corresponding to the first identifier and a to-be-modified part of the charging rule to the TPF.

In addition, the present invention also provides a method for performing a Modify or establish operation on the charging rule(s) in packet data service, which allows the CRF to provide the TPF with only the parameter information required to be modified or installed instead of other charging rule information that is the same, thereby avoiding redundant information transmission between the CRF and the TPF and reducing greatly the message flow load between the CRF and the TPF. In addition, the present invention also provides a method for responding the operations in packet data service so that the CRF can learn the operations result performed by the TPF.

### Brief Description of the Drawings

Figure 1 is a flowchart illustrating an activation, data transmission and de-activation of a PDP Context;
Figure 2A is a schematic diagram illustrating a structure of an online charging FBC system;
Figure 2B is a schematic diagram illustrating a structure of an offline charging FBC system;
Figure 3A is a flowchart illustrating a charging rule when a bearer is established;
Figure 3B is a flowchart illustrating a charging rule when a bearer is modified;
Figure 3C is a flowchart illustrating a charging rule when a bearer is deleted;
Figure 4 is a flowchart illustrating an AF providing charging input information for a CRF;
Figure 5 is a flowchart illustrating a CRF voluntarily issuing a charging rule to a TPF;
Figure 6 is a schematic diagram illustrating an embodiment of the present invention; and
Figure 7 is a schematic diagram illustrating another embodiment of the present

### Detailed Description of the Invention

The present invention will be described in detail hereinafter with reference to the accompanying drawings.

In the present invention, a plurality of identifiers is respectively allocated for the plurality of charging rules and all provided to the TPF by the CRF. The identifiers are used to identify the charging rules, the Service Data Flow Filters, or the Service Data Flow Filters in the charging rules, so that the TPF can perform corresponding operations on the charging rules or the Service Data Flow Filters according to the identifiers. The identifier may be allocated by the CRF or the TPF, or by the operators, or may be defined in some specifications. For example, the identifier of the charging rules pre-configured in the TPF is probably allocated by the operators; and the CR1~CR5 identifiers pre-configured and directly issued by the CRF to identify some charging rules is defined in the specification, with which the TPF is able to find a suitable charging rule to adopt.

When the CRF provides a charging rule for the TPF, a charging rule identifier is allocated for uniquely identifying this charging rule and this charging rule is then provided to the TPF. The charging rule identifier may be a combination of certain symbols and serial numbers, like CR1 and CR2, where CR is the abbreviation of Charging Rule; or a single serial number or in other patterns.

In addition, while providing charging rules with charging rule identifiers to the TPF, the CRF also provides a plurality of action indications with charging rule identifiers, requiring the TPF to perform indicated operations on the charging rule corresponding to the charging rule identifier. The action indication may be an Install charging rule, a Remove charging rule, or a Modify charging rule. When the action indication is substantially the Install charging rule, the CRF needs to provide the information of the to-be-Install charging rule for the TPF. When the action indication is substantially the Remove charging rule, the CRF needs to provide the identifier of the to-be-removed charging rule for the TPF. When the action indication is substantially the Modify charging rule, the CRF needs to provide the identifier of the to-be-modified charging rule as well as the to-be-modified part of the charging rule for the TPF. The to-be-modified part may be some parameters contained in the charging rule. For instance, the CRF provides a Remove indication and an identifier CR2 for the TPF, which means the CRF requires the TPF to remove the charging rule with identifier of CR2; or the CRF provides a Modify indication, an identifier CR3 and a precedence parameter 3, which means the CRF requires the TPF to modify the precedence class of the charging rule with identifier of CR3 to Precedence 3.

When the TPF executes a Modify action indication provided by the CRF, the specific implementing procedure may include: while deleting the original one, installing a new charging rule which is substantially the modified charging rule, In addition, in order to make the management convenient and the system design less complicated, some charging rule parameters, such as the charging rule identifier and charging method (e.g. online charging, offline charging or non-charging, may be set as unmodifiable for a Modify operation.

When providing a Service Data Flow Filter for the TPF, the CRF allocates a filter identifier to uniquely identify this Service Data Flow Filter and provides the filter identifier for the TPF. The filter identifier may be a combination of certain symbols and serial numbers, e.g. Filter1 and Filter2, a combination of a charging rule identifier, certain symbols and serial numbers so as to indicate the charging rule to which the Service Data Flow Filter belongs, e.g. CR1Filter1, CR1Filter2, and CR3Filter2, or a single serial number independent of a charging rule or in other forms.

In addition, while providing a Service Data Flow Filter together with a filter identifier for the TPF, the CRF may also provide an action indication with a filter identifier, requiring the TPF to perform the indicated operation on the Service Data Flow Filter corresponding to the filter identifier. The action indication may be an indication of Installing Service Data Flow Filter, Removing Service Data Flow Filter, Modifying Service Data Flow Filter, and Activating Service Data Flow Filter. When the action indication is the Install Service Data Flow Filter indication, the CRF needs to provide information of the to-be-installed Service Data Flow Filter for the TPF. When the action indication is the Remove Service Data Flow Filter indication, the CRF needs to provide the identifier of the to-be-removed Service Data Flow Filter for the TPF. When the action indication is the Modify Service Data Flow Filter indication, the CRF needs to provide the identifier of the to-be-modified Service Data Flow Filter as well as the to-be-modified part of the charging rule for the TPF. When the action indication is the Activate Service Data Flow Filter indication, the CRF needs to provide the identifier of the to-be-activated Service Data Flow Filter; furthermore, the CRF may provide contents of the to-be-activated Service Data Flow Filter as well as the corresponding charging rule identifier for the TPF. For instance, if the CRF provides the Remove operation indication and Filter1 for the TPF, which means the CRF requires the TPF to remove the Service Data Flow Filter with the identifier Filter1. If the CRF provides the Modify operation indication, CR2Filterl, and the protocol identifier Hyper Text Transfer Protocol (HTTP) for the TPF, which means the CRF requires the TPF to modify the protocol identifier of Service Data Flow Filter with identifier CR2Filter1 to HTTP. For another instance, if the CRF provides the Activate operation indication for the TPF, charging rule CR0, and Filter0, where Filter0 is the Service Data Flow Filter predefined in the TPF, the TPF will add the predefined Filter0 to the charging rule CR0.

After performing the operation according to the action indication from the CRF, the TPF may return an Operation Success Response or an Operation Failure Response to the CRF according to the operation result. While the TPF returns an Operation Failure Response to the CRF, the TPF may further provide corresponding error cause information to the CRF.

According to the present invention, a charging rule may, include the information not only the charging method for the service data flow such as online charging or offline charging, volume-based or time-based if the charging method is offline charging, charging keys, Service Data Flow Filters, Precedence of the charging rule, and the identifiers that can be the charging rules identifier, a filter identifier, or the filter identifiers of each Service Data Flow Filter in the charging rule, but also the information like the action indications that can be the Remove operation indications, the Modify operation indications, the Activate operation indications, the install operation indications, or any combination of the above-mentioned operation indications.

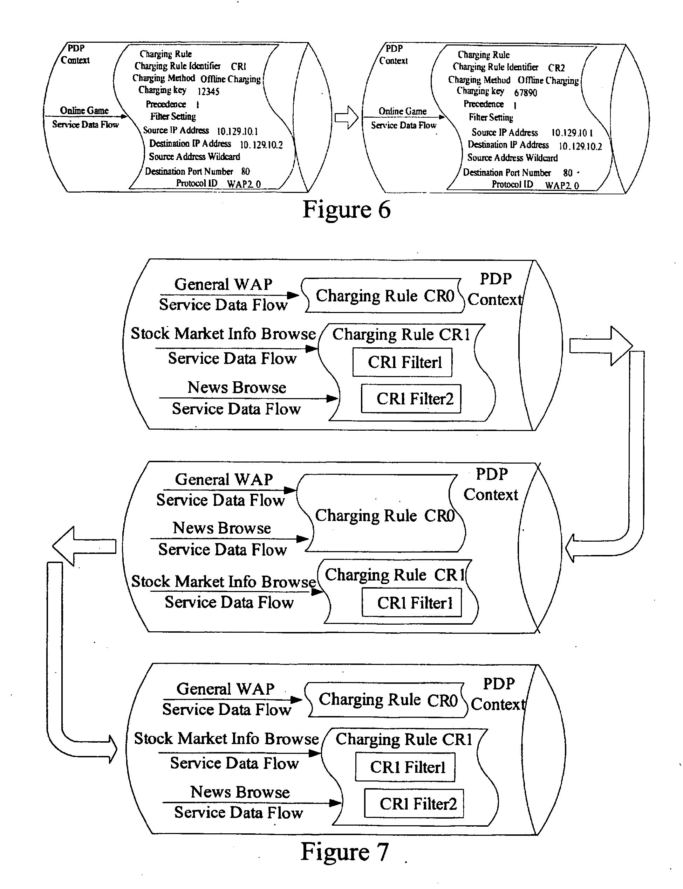

Figure 6 is a schematic diagram illustrating an embodiment of the present invention. As shown in Figure 6, the user activates a PDP Context, through which a service information interaction is performed. For instance, the user access an "online game" service on a WAP game website through the UE, which is charged by the charging rule with the identifier of CR1. This charging rule includes the charging method of online charging , a charging key 12345, the charging rule Precedence 1, and the filter setting of the source IP address 10.129.10.1, the destination IP address 10.129.10.2, the source port number wildcard, the destination port number 80, the protocol ID WAP2.0, and the charging rule identifier of CR1.

When the WAP game website finds that the user is updated to a super player, according to the preferential policy of this WAP game website, super player has a 50% discount with the "online game" service charging. In this case, the WAP game website sends a charging-relevant input information, such as service information and event information, to the CRF of this UE, requiring the CRF to send a new charging rule to the TPF so that the TPF can charge this user of the "online game" service according to the new charging rule.

According to the charging-relevant input information of the WAP game website, the CRF installs a new charging rule with the identifier of CR2, and then sends the charging rule with identifier of CR2 to the TPF. The charging rule includes: the charging method of offline charging, the charging key 67890, the charging rule Precedence 1, and the filter setting of the source IP address 10.129.10.1, the destination IP address 10.129.10.2, the source port number wildcard, the destination port number 80, the protocol ID WAP2.0, and the charging rule identifier of CR2. Besides, the CRF may carry an install operation indication, requiring the TPF to install a charging rule with identifier of CR2; furthermore, the CRF may provide a Remove operation indication and the CR1, requiring the TPF to remove the original charging rule with the identifier CR1.

After receiving the charging rule with identifier of CR2 and the corresponding install operation indication, charging rule with identifier of CR1 and the corresponding Remove operation indication, the TPF searches for the charging rule with identifier of CR1, ends the collection of a Charging Data Record (CDR) of the charging rule CR1, and removes the charging rule CR1. Then the TPF installs the new charging rule CR2, and collects statistics of the charging information of the online game service of the user according to charging rule CR2.

There's also another approach of the above process. The CRF determines the modification needed to be carried out on the current charging rule according to the charging-relevant input information of the WAP game website, and then sends the Modify operation indication, the to-be-modified parameters and the to-be-modified charging rule identifier to the TPF, e.g. the charging key 67890 and the charging rule identifier CR1. After receiving the Modify operation indication, the to-be-modified parameter charging key 67890 and the to-be-modified charging rule identifier CR1, the TPF searches for the charging rule with identifier CR1, ends the collection of the CDR of charging rule CR1, and then modifies the corresponding parameters in the charging rule, e.g. modifies the charging key of the charging rule with identifier of CR1 to 67890, and collects CDR of the "online game" service accessed by the user according to the current charging rule.

Figure 7 is a schematic diagram illustrating another embodiment of the present invention. As shown in Figure 7, the default charging rule set in the TPF is the rule with identifier CR0. The charging rule includes the following information: the charging method of offline charging, the charging key 11111, precedence of the charging rule 3, the source IP address of the filter wildcard, the destination IP address wildcard, source port number wildcard, the destination port number wildcard, and the protocol ID WAP2.0, and the charging rule identifier CR0. In default condition, the TPF charges the user for all common WAP services by adopting the charging rule with the identifier CR0. The user may activate a PDP Context and perform information interaction of a plurality of services through this PDP Context. For instance, the user may browse news and stock market information on a certain WAP website through the UE. The news information browse service and stock market information browse service of this WAP website are charged with the same charging rule, but have a higher charging rate than that of common WAP service. In this case, according to the charging-relevant input information provided by the WAP website, the CRF sends the charging rule with identifier of CR1 to the TPF. The charging rule includes the following information: the charging method of offline charging, the charging key 24561, the precedence of the charging rule 1, and the filter CR1Filter1 setting of the source IP address 10.129.10.5, destination IP address 10.129.10.6, source port number wildcard, destination port number 80, the protocol ID WAP2.0, and the Universe Resource Location (URL) of stock information browse (wap.sina.com/gushi), and the filter CR1Filter2 setting of the source IP address of 10.129.10.5, destination IP address 10.129.10.6, source port number wildcard, destination port number 80, the protocol ID WAP2.0, the Universe Resource Location (URL) of stock information browse (wap.sina.com/gushi), and the charging rule identifier CR1. The TPF charges the user for the news information browse service and stock market information browse service according to the charging rule with identifier CR1.

According to the preferential policy of this WAP game website, charging rate from 8:00 pm of the day to 8:00 am of the next day for the news information browse service is the same as that of the common WAP service. When it is 8:00 pm, WAP website sends to the CRF the above event and the charging-relevant input information, such as the corresponding Service Data Flow Filter information, requiring the CRF to send a new charging rule to the TPF, so that the TPF can charge according to the new charging rule, thereby charging the user with the same rate as the common WAP charging rule for the news information browse service.

The CRF determines that the news information browse service should be charged according to charging rule CR0 of common WAP services while the stock market information browse service is still charged according to charging rule CR1 according to the charging-relevant input information provided by WAP game website. Then the CRF sends a Provision Charging Rule message to the TPF. The Provision Charging Rule includes the action indication of removing Service Data Flow Filter as well as the identifier of the to-be-removed Service Data Flow Filter, CR1Filter2. After receiving the Provision Charging Rule message from the CRF, according to the Remove operation indication and CR1Filter2, the TPF searches for the original charging rule with identifier CR1 and ends CDR collection of this charging rule. The TPF may also end the collection of the CDR of charging rule CR0 to synchronize with the subsequent CDR statistics. The TPF then removes the Service Data Flow Filter with identifier CR1Filter2. After the Service Data Flow Filter with identifier CR1Filter2 is removed, the charging rule CR1 includes the following information: the charging method of offline charging, the charging key 24561, Precedence of the charging rule 1, and the filter CR1Filter1 setting of the source IP address 10.129.10.5, destination IP address10.129.10.6, source port wildcard, destination port number 80, the protocol ID WAP2.0, and the URL of stock market information browse (wap.sina.com/gushi), and the charging rule identifier CR1. In this way, the TPF collects CDR of the stock market information browse service accessed by the user according to charging rule CR1 and the news information browse service and other WAP services accessed by the user according to charging rule CR0.

According to the charging setting of the WAP game website, the charging rate of news information browse service should be reset when it is 8:00 am. At this time, therefore, the WAP website sends the charging-relevant input information to the CRF, requiring the CRF to send a new charging rule to the TPF, so that the TPF can charge according to the new charging rule, thereby charging the user in terms of the same charging rule as that of stock market information browse service for the news information browse service.

The CRF determines that the news information browse service should be charged according to the same charging rule CR1 as that of the stock market information browse service, according to the charging-relevant input information provided by the WAP game website. The CRF sends a Provision Charging Rule message to the TPF. The Provision Charging Rule includes the action indication of modifying a Service Data Flow Filter, the corresponding charging rule identifier CR1 and the identifier of the to-be-added Service Data Flow Filter CR1Filter2 with the source IP address 10.129.10.5, destination IP address 10.129.10.6, source port number wildcard, destination port number 80, protocol ID WAP2.0, and URL of the news information browse (wap.sina.com/xinwen). After receiving the Provision Charging Rule message from the CRF, the TPF searches according to the modify operation indication and corresponding charging rule CR1 for the original charging rule with identifier of CR1, ends CDR collection based on the charging rule CR1, and adds the Service Data Flow Filter CR1Filter2 to the charging rule CR1. After the Service Data Flow Filter with identifier CR1Filter2 is added, the charging rule CR1 includes the following information: the charging method of offline charging, the charging key 24561, precedence of the charging rule 1, and the filter CR1Filter1 setting of the source IP address 10.129.10.5, destination IP address 10.129.10.6, source port number wildcard, destination port number 80, protocol ID WAP2.0, URL of the stock market information browse (wap.sina.com/gushi), and the filter CR1Filter2 setting of the source IP address of 10.129.10.5, destination IP address 10.129.10.6, source port number wildcard, destination port number 80, protocol ID WAP2.0, URL of the news information browse (wap.sina.com/xinwen), and the charging rule identifier CR1. In this way, the TPF collects CDR for stock market information browse service and news information browse service accessed by the user according to charging rule CR1, and for other WAP services accessed by the user according to charging rule CR0.

In short, the above description is just preferred embodiments of this invention and not to be construed as limits to the protection scope thereof.

## Claims

1. A method for enhancing charging rules of a packet data service according to the GPRS architecture, **characterized in** comprising the steps of:
allocating a first identifier to identify a charging rule and a first action indication corresponding to the first identifier indicating to perform operations on the charging rule corresponding to the first identifier according to the first action indication; wherein the first action indication indicates to modify the charging rule identified by the first identifier; and
providing to a Traffic Plane Function, TPF (205), the first identifier and the first action indication corresponding to the first identifier and a to-be-modified part of the charging rule.

2. The method according to claim 1, after the TPF is provided by the first identifier and the first action indication corresponding to the first identifier and the to-be-modified part of the charging rule, the method further comprises:
searching, by the TPF (205), the charging rule corresponding to the first identifier;
modifying, by the TPF (205), the charging rule corresponding to the first identifier according to the provided to-be-modified part of the charging rule.

3. The method according to claim 2, before modifying the charging rule, the method further comprises:
ending, by the TPF (205), a collection of a charging data record of the charging rule corresponding to the first identifier; and after modifying the charging rule,
collecting, by the TPF (205), statistics of charging information according to the charging rule corresponding to the first identifier.

4. The method according to any one of claims 1-3, wherein the to-be-modified part is parameter information contained in the charging rule to the TPF (205).

5. The method according to claim 1, further comprising:
providing to the TPF (205) a second identifier and a second action indication to remove a charging rule corresponding to the second identifier.

6. The method according to claim 5, further comprising:
allocating a third identifier to identify a charging rule and a third action indication corresponding to the third identifier indicating to install the charging rule identified by the third identifier;
providing to the TPF (205) the third identifier of the to-be-installed charging rule and the third action indication indicating to install the charging rule corresponding to the third identifier and information of the to-be-Installed charging rule.

7. The method according to claim 6, further comprising:
searching, by the TPF (205), the charging rule corresponding to the second identifier;
ending, by the TPF (205), a collection of a charging data record of the charging rule corresponding to the second identifier;
removing, by the TPF (205), the charging rule corresponding to the second identifier;
installing, by the TPF (205), the charging rule corresponding to the third identifier according to the provided information of the to-be-Installed charging rule;
collecting, by the TPF (205), statistics of charging information according to the charging rule corresponding to the third identifier.

8. The method according to claim 1 or 5, comprising:
providing a fourth identifier to identify a service data flow filter and a fourth action indication corresponding to the fourth identifier to the TPF (205);
performing operation, by the TPF (205), on the service data flow filter corresponding to the fourth identifier.

9. The method according to claim 8, wherein the fourth action indication comprises an indication of installing service data flow filter, removing service data flow filter, modifying service data flow filter, or activating service data flow filter.

10. The method according to claim 1 or 5, wherein the first identifier is allocated by a Charging Rule Function, CRF (203), the TPF (205), or a network operator, or defined by specification, or determined by any combination of the mentioned above.

11. The method according to any one of preceding claims, further comprising:
returning, by the TPF (205), an operation response according to an operation result.

12. The method according to claim 11, wherein the operation response comprises an Operation Success Response or an Operation Failure Response, wherein the Operation Failure Response carries error cause information.

13. The method according to any one of preceding claims, further comprising:
allocating the first identifier to identify the charging rule uniquely.

14. A system for enhancing charging rules of a packet data service, according to the GPRS architecture, **characterized in that** the system comprises:
a providing means (203, 205), adapted to provide a first identifier to identify a charging rule and a first action indication corresponding to the first identifier indicating to perform operations on the charging rule corresponding to the first identifier according to the first action indication; wherein
the first action indication indicates to modify the charging rule identified by the first identifier; and the system is further adapted to provide to a Traffic Plane Function, TPF (205), the first identifier and the first action indication corresponding to the first identifier and a to-be-modified part of the charging rule to the TPF (205).

15. The system of claim 14, wherein the system is further adapted to
search the charging rule corresponding to the first identifier; and
end a collection of a charging data record of the charging rule corresponding to the first identifier; and
modify the charging rule corresponding to the first identifier according to the provided to-be-modified part of the charging rule; and
collect statistics of charging information according to the charging rule corresponding to the first identifier.

16. The system of claim 14, wherein the system is further adapted to
provide to the TPF (205) a second identifier and a second action indication to remove a charging rule corresponding to the second identifier;
allocate a third identifier to identify a charging rule and a third action indication corresponding to the third identifier indicating to install the charging rule identified by the third identifier; and
provide to the TPF the third identifier of the to-be-installed charging rule and the third action indication corresponding to the third identifier and information of the to-be-installed charging rule, wherein the system is further adapted to
search the charging rule corresponding to the second identifier; and
end a collection of a charging data record of the charging rule corresponding to the second identifier; and
remove the charging rule corresponding to the second identifier; and
install the charging rule corresponding to the third identifier according to the provided information of the to-be-installed charging rule; and
collect statistics of charging information according to the charging rule corresponding to the third identifier.

17. The system of any one of claims 14-16, wherein the system is the TPF (205).

## Patentansprüche

1. Verfahren zur Verbesserung von Gebührenberechnungsregeln eines Paketdatendienstes gemäß der GPRS-Architektur, **dadurch gekennzeichnet, dass** es die folgenden Schritte umfasst:
Zuteilen einer ersten Kennung, um eine Gebührenberechnungsregel und eine der ersten Kennung entsprechende erste Aktionsangabe zu identifizieren, die angibt, an der der ersten Kennung entsprechenden Gebührenberechnungsregel gemäß der ersten Aktionsangabe Operationen auszuführen; wobei die erste Aktionsangabe angibt, die durch die erste Kennung identifizierte Gebührenberechnungsregel zu modifizieren; und
Leiten der ersten Kennung und der der ersten Kennung entsprechenden ersten Aktionsangabe und eines zu modifizierenden Teils der Gebührenberechnungsregel zu einer Traffic Plane Function TPF (205).

2. Verfahren nach Anspruch 1, wobei das Verfahren, nachdem die TPF die erste Kennung und die der ersten Kennung entsprechende erste Aktionsangabe und den zu modifizierenden Teil der Gebührenberechnungsregel erhalten hat, ferner die folgenden Schritte umfasst:
die TPF (205) sucht nach der der ersten Kennung entsprechenden Gebührenberechnungsregel;
die TPF (205) modifiziert die der ersten Kennung entsprechende Gebührenberechnungsregel gemäß dem bereitgestellten zu modifizierenden Teil der Gebührenberechnungsregel.

3. Verfahren nach Anspruch 2, wobei das Verfahren vor dem Modifizieren der Gebührenberechnungsregel ferner die folgenden Schritte umfasst:
die TPF (205) beendet eine Sammlung eines Gebührenberechnungs-Datensatzes der der ersten Kennung entsprechenden Gebührenberechnungsregel; und nach dem Modifizieren der Gebührenberechnungsregel
sammelt die TPF (205) Statistiken von Gebührenberechnungsinformationen gemäß der der ersten Kennung entsprechenden Gebührenberechnungsregel.

4. Verfahren nach einem der Ansprüche 1-3, wobei es sich bei dem zu modifizierenden Teil um Parameterinformationen handelt, die in der Gebührenberechnungsregel für die TPF (205) enthalten sind.

5. Verfahren nach Anspruch 1, ferner mit dem folgenden Schritt:
Leiten einer zweiten Kennung und einer zweiten Aktionsangabe zu der TPF (205), um eine der zweiten Kennung entsprechende Gebührenberechnungsregel zu entfernen.

6. Verfahren nach Anspruch 5, ferner mit den folgenden Schritten:
Zuteilen einer dritten Kennung, um eine Gebührenberechnungsregel und eine der dritten Kennung entsprechende dritte Aktionsangabe zu identifizieren, die angibt, die durch die dritte Kennung identifizierte Gebührenberechnungsregel zu installieren;
Leiten der dritten Kennung der zu installierenden Gebührenberechnungsregel und der dritten Aktionsangabe, die angibt, die der dritten Kennung entsprechende Gebührenberechnungsregel zu installieren, und von Informationen der zu installierenden Gebührenberechnungsregel zu der TPF (205).

7. Verfahren nach Anspruch 6, ferner mit den folgenden Schritten:
die TPF (205) sucht nach der der zweiten Kennung entsprechenden Gebührenberechnungsregel;
die TPF (205) beendet eine Sammlung eines Gebührenberechnungs-Datensatzes der der zweiten Kennung entsprechenden Gebührenberechnungsregel;
die TPF (205) entfernt die der zweiten Kennung entsprechende Gebührenberechnungsregel;
die TPF (205) installiert die der dritten Kennung entsprechende Gebührenberechnungsregel gemäß den bereitgestellten Informationen der zu installierenden Gebührenberechnungsregel;
die TPF (205) sammelt Statistiken von Gebührenberechnungsinformationen gemäß der der dritten Kennung entsprechenden Gebührenberechnungsregel.

8. Verfahren nach einem der Ansprüche 1-5, mit den folgenden Schritten:
Leiten einer vierten Kennung, um ein Dienstdatenflussfilter zu identifizieren, und einer der vierten Kennung entsprechenden vierten Aktionsangabe zu der TPF (205);
Ausführen von Operationen an dem der vierten Kennung entsprechenden Dienstdatenflussfilter durch die TPF (205).

9. Verfahren nach Anspruch 8, wobei die vierte Aktionsangabe eine Angabe des Installierens eines Dienstdatenflussfilters, des Entfernens eines Dienstdatenflussfilters, des Modifizierens eines Dienstdatenflussfilters oder des Aktivierens eines Dienstdatenflussfilters umfasst.

10. Verfahren nach einem der Ansprüche 1-5, wobei die erste Kennung durch eine Charge Rule Function CRF (203), die TPF (205) oder einen Netzbetreiber zugeteilt oder durch Spezifikation definiert oder durch eine beliebige Kombination des Obenerwähnten bestimmt wird.

11. Verfahren nach einem der vorhergehenden Ansprüche, ferner mit dem folgenden Schritt:
die TPF (205) gibt gemäß einem Operationsergebnis eine Operationsantwort zurück.

12. Verfahren nach Anspruch 11, wobei die Operationsantwort eine Operationerfolgreich-Antwort oder eine Operation-erfolglos-Antwort umfasst, wobei die Operation-erfolglos-Antwort Fehlerursacheninformationen trägt.

13. Verfahren nach einem der vorhergehenden Ansprüche, ferner mit dem folgenden Schritt:
Zuteilen der ersten Kennung, um die Gebührenberechnungsregel eindeutig zu identifizieren.

14. System zur Verbesserung von Gebührenberechnungsregeln eines Paketdatendienstes gemäß der GPRS-Architektur, **dadurch gekennzeichnet, dass** das System Folgendes umfasst:
ein Bereitstellungsmittel (203, 205), das dafür ausgelegt ist, Folgendes bereitzustellen: eine erste Kennung, um eine Gebührenberechnungsregel und eine der ersten Kennung entsprechende erste Aktionsangabe zu identifizieren, die angibt, an der der ersten Kennung entsprechenden Gebührenberechnungsregel gemäß der ersten Aktionsangabe Operationen auszuführen; wobei
die erste Aktionsangabe angibt, die durch die erste Kennung identifizierte Gebührenberechnungsregel zu modifizieren; und das System ferner dafür ausgelegt ist, die erste Kennung und die der ersten Kennung entsprechende erste Aktionsangabe und einen zu modifizierenden Teil der Gebührenberechnungsregel zu einer Traffic Plane Function TPF (205) zu leiten.

15. System nach Anspruch 14, wobei das System ferner für Folgendes ausgelegt ist:
Suchen nach der der ersten Kennung entsprechenden Gebührenberechnungsregel;
Beenden einer Sammlung eines Gebührenberechnungs-Datensatzes der der ersten Kennung entsprechenden Gebührenberechnungsregel; und
Modifizieren der der ersten Kennung entsprechenden Gebührenberechnungsregel gemäß dem bereitgestellten zu modifizierenden Teil der Gebührenberechnungsregel; und
Sammeln von Statistiken von Gebührenberechnungsinformationen gemäß der der ersten Kennung entsprechenden Gebührenberechnungsregel.

16. System nach Anspruch 14, wobei das System ferner für Folgendes ausgelegt ist:
Leiten einer zweiten Kennung und einer zweiten Aktionsangabe zu der TPF (205), um eine der zweiten Kennung entsprechende Gebührenberechnungsregel zu entfernen;
Zuteilen einer dritten Kennung, um eine Gebührenberechnungsregel und eine der dritten Kennung entsprechende dritte Aktionsangabe zu identifizieren, die angibt, die durch die dritte Kennung identifizierte Gebührenberechnungsregel zu installieren;
Leiten der dritten Kennung der zu installierenden Gebührenberechnungsregel und der der dritten Kennung entsprechenden dritten Aktionsangabe und von Informationen der zu installierenden Gebührenberechnungsregel zu der TPF, wobei das System ferner für Folgendes ausgelegt ist:
Suchen nach der der zweiten Kennung entsprechenden Gebührenberechnungsregel; und
Beenden einer Sammlung eines Gebührenberechnungs-Datensatzes der der zweiten Kennung entsprechenden Gebührenberechnungsregel; und
Entfernen der der zweiten Kennung entsprechenden Gebührenberechnungsregel; und
Installieren der der dritten Kennung entsprechenden Gebührenberechnungsregel gemäß den bereitgestellten Informationen der zu installierenden Gebührenberechnungsregel; und
Sammeln von Statistiken von Gebührenberechnungsinformationen gemäß der der dritten Kennung entsprechenden Gebührenberechnungsregel.

17. System nach einem der Ansprüche 14-16, wobei das System die TPF (205) ist.

## Revendications

1. Procédé de rehaussement des règles de taxation d'un service de données par paquets en fonction de l'architecture GPRS, **caractérisé en ce qu'**il comprend les étapes suivantes :
allocation d'un premier identifiant pour identifier une règle de taxation et d'une première indication d'action correspondant au premier identifiant indiquant des opérations à effectuer sur la règle de taxation correspondant au premier identifiant en fonction de la première indication d'action ; dans lequel la première indication d'action indique de modifier la règle de taxation identifiée par le premier identifiant ; et
fourniture à une Fonction de Plan de Trafic, TPF (Traffic Plane Function) (205) du premier identifiant et de la première indication d'action correspondant au premier identifiant et d'une partie à modifier de la règle de taxation.

2. Procédé selon la revendication 1, après que la TPF a reçu le premier identifiant et la première indication d'action correspondant au premier identifiant et la partie à modifier de la règle de taxation, le procédé comprend en outre :
la recherche, par la TPF (205), de la règle de taxation correspondant au premier identifiant ;
la modification, par la TPF (205) de la règle de taxation correspondant au premier identifiant en fonction de la partie à modifier de la règle de taxation fournie.

3. Procédé selon la revendication 2, avant la modification de la règle de taxation, le procédé comprend en outre :
la conclusion, par la TPF (205), d'une collecte d'un enregistrement de données de taxation de la règle de taxation correspondant au premier identifiant, et après la modification de la règle de taxation,
la collecte, par la TPF (205), de statistiques d'informations de taxation en fonction de la règle de taxation correspondant au premier identifiant.

4. Procédé selon l'une quelconque des revendications 1 à 3, dans lequel la partie à modifier consiste en informations paramétriques contenues dans la règle de taxation à la TPF (205).

5. Procédé selon la revendication 1, comprenant en outre :
la fourniture à la TPF (205) d'un deuxième identifiant et d'une deuxième indication d'action afin d'éliminer une règle de taxation correspondant au deuxième identifiant.

6. Procédé selon la revendication 5, comprenant en outre :
l'allocation d'un troisième identifiant pour identifier une règle de taxation et d'une troisième indication d'action correspondant au troisième identifiant indiquant d'installer la règle de taxation identifiée par le troisième identifiant ;
la fourniture à la TPF (205) du troisième identifiant de la règle de taxation à installer et de la troisième indication d'action indiquant d'installer la règle de taxation correspondant au troisième identifiant et des informations de la règle de taxation à installer.

7. Procédé selon la revendication 6, comprenant en outre :
la recherche, par la TPF (205), de la règle de taxation correspondant au deuxième identifiant ;
la conclusion, par la TPF (205), d'une collecte d'un enregistrement de données de taxation de la règle de taxation correspondant au deuxième identifiant ;
l'élimination, par la TPF (205) de la règle de taxation correspondant au deuxième identifiant ;
l'installation, par la TPF (205), de la règle de facturation correspondant au troisième identifiant en fonction des informations fournies de la règle de taxation à installer ;
la collecte, par la TPF (205) de statistiques d'informations de taxation en fonction de la règle de taxation correspondant au troisième identifiant.

8. Procédé selon la revendication 1 ou 5, comprenant :
la fourniture d'un quatrième identifiant pour identifier un filtre de flux de données de service et d'une quatrième indication d'action qui correspond au quatrième identifiant à la TPF (205) ;
l'exécution d'une opération, par la TPF (205), sur le filtre de flux de données de service correspondant au quatrième identifiant.

9. Procédé selon la revendication 8, dans lequel la quatrième indication d'action comprend une indication d'installation de filtre de flux de données de service, d'élimination de filtre de flux de données de service, de modification de filtre de flux de données de service ou d'activation de filtre de flux de données de service.

10. Procédé selon la revendication 1 ou 5, dans lequel le premier identifiant est alloué par une Fonction de Règle de Taxation CRF (Charging Rule Function) (203), la TPF (205) ou un opérateur réseau, ou défini par spécification, ou déterminé par n'importe quelle combinaison de ceux-ci.

11. Procédé selon l'une quelconque des revendications précédentes, comprenant en outre :
le renvoi, par la TPF (205), d'une réponse d'opération en fonction d'un résultat d'opération.

12. Procédé selon la revendication 11, dans lequel la réponse d'opération comprend une Réponse de Succès d'Opération ou une Réponse d'Echec d'Opération, dans lequel la Réponse d'Echec d'Opération achemine des informations de cause d'erreur.

13. Procédé selon l'une quelconque des revendications précédentes, comprenant en outre :
l'allocation du premier identifiant pour identifier la règle de taxation de façon unique.

14. Système de rehaussement des règles de taxation d'un service de données par paquets en fonction de l'architecture GPRS, **caractérisé en ce que** le système comprend :
un moyen de fourniture (203, 205), adapté pour fournir un premier identifiant pour identifier une règle de taxation et une première indication d'action correspondant au premier identifiant indiquant des opérations à effectuer sur la règle de taxation correspondant au premier identifiant en fonction de la première indication d'action ; dans lequel
la première indication d'action indique de modifier la règle de taxation identifiée par le premier identifiant ; et le système est en outre adapté pour fournir à une Fonction de Plan de Trafic, TPF (Traffic Plane Function) (205), le premier identifiant et la première indication d'action correspondant au premier identifiant et une partie à modifier de la règle de taxation à la TPF (205).

15. Système selon la revendication 14, dans lequel le système est adapté en outre pour rechercher la règle de taxation correspondant au premier identifiant ; et
conclure une collecte d'un enregistrement de données de taxation de la règle de taxation correspondant au premier identifiant ; et
modifier la règle de taxation correspondant au premier identifiant en fonction de la partie à modifier de la règle de taxation fournie ; et
collecter des statistiques d'informations de taxation en fonction de la règle de taxation correspondant au premier identifiant.

16. Système selon la revendication 14, dans lequel le système est en outre adapté pour fournir à la TPF (205) un deuxième identifiant et une deuxième indication d'action afin d'éliminer une règle de taxation correspondant au deuxième identifiant ;
allouer un troisième identifiant pour identifier une règle de taxation et une troisième indication d'action correspondant au troisième identifiant indiquant d'installer la règle de taxation identifiée par le troisième identifiant ; et
fournir à la TPF le troisième identifiant de la règle de taxation à installer et la troisième indication d'action correspondant au troisième identifiant et des informations de la règle de taxation à installer, dans lequel le système est adapté en outre pour
rechercher la règle de taxation correspondant au deuxième identifiant ; et
conclure une collecte d'un enregistrement de données de taxation de la règle de taxation correspondant au deuxième identifiant ; et
éliminer la règle de taxation correspondant au deuxième identifiant ; et installer la règle de taxation correspondant au troisième identifiant en fonction des informations fournies de la règle de taxation à installer ; et
collecter des statistiques d'informations de taxation en fonction de la règle de taxation correspondant au troisième identifiant.

17. Système selon l'une quelconque des revendications 14 à 16, dans lequel le système est la TPF (205).
